# EUROPÄISCHE PATENTANMELDUNG

(11) **EP 1 010 593 A2**
(43) Veröffentlichungstag der Anmeldung: **21.06.2000**
(21) Anmeldenummer: 99124853.5
(22) Anmeldetag: 15.12.1999
(51) Int. Cl.: B60R 22/40

(54) **Sensor für einen Gurtaufroller**

(30) Priorität: 18.12.1998 DE 29822610 U
(71) Anmelder: TRW Occupant Restraint Systems GmbH & Co. KG, 73553 Alfdorf (DE)
(72) Erfinder: Kielwein, Thomas, 73569 Eschbach (DE); Schmid, Johannes, 73527 Schwäbisch Gmünd (DE); Rink, Jürgen, 73550 Waldstetten (DE)
(74) Vertreter: Sties, Jochen, Dipl.-Ing.

(57) **Zusammenfassung**

Ein Sensor für einen Gurtaufroller für Fahrzeugsicherheitsgurtsysteme, mit einem Trägheitskörper (22; 62) und einer Kupplungsklinke (24; 62), die durch eine Verlagerung des Trägheitskörpers (22; 62) in eine Kupplungsverzahnung (16) eingesteuert werden kann, ist dadurch gekennzeichnet, daß die Kupplungsklinke (24; 74) durch einen ersten Arm eines zweiseitigen Hebels (26; 72) gebildet ist, an dessen zweitem Arm (42; 76) der Trägheitskörper (22; 62) bei einer Verlagerung angreift.

## Beschreibung

Die Erfindung betrifft einen Sensor für einen Gurtaufroller für Fahrzeugsicherheitsgurtsysteme, mit einem Trägheitskörper und einer Kupplungsklinke, die durch eine Verlagerung des Trägheitskörpers in eine Kupplungsverzahnung eingesteuert werden kann.

Sensoren dieser Art sind bekannt und werden in großer Stückzahl für zahlreiche Fahrzeuge hergestellt. Um im Falle eines Aufpralls des Fahrzeugs die Gurtspule gegen ein Abziehen von Gurtband zu blockieren, ist eine Blockiermechanismus vorgesehen, der mit Hilfe des auf Beschleunigungen des Fahrzeugs ansprechenden fahrzeugsensitiven Sensors angesteuert wird. Bekannte fahrzeugsensitive Sensoren weisen eine Kupplungsklinke in Form eines einseitigen Hebels auf, unter der eine Stahlkugel angeordnet ist. Die Kupplungsklinke liegt auf der Stahlkugel mit einer kugelabschnittsförmigen Vertiefung auf. Tritt bei einem Fahrzeugaufprall eine starke Beschleunigung auf, so verlagert sich die Stahlkugel, so daß die kugelabschnittsförmige Vertiefung und damit die Kupplungsklinke angehoben werden. Der fahrzeugsensitive Sensor ist dabei unterhalb einer Kupplungsscheibe angeordnet, so daß beim Anheben der Kupplungsklinke deren Ende in die Kupplungsverzahnung eingesteuert und damit der Blockiermechanismus aktiviert wird. Konventionelle fahrzeugsensitive Sensoren sind nur bedingt an verschiedene Anordnungen im Gurtaufroller anpaßbar. Ein weiterer Nachteil konventioneller fahrzeugsensitiver Sensoren liegt darin, daß ein gegenüber der konstruktiv vorgegebenen Einbaulage geneigter Einbau des Gurtaufrollers nicht möglich ist, da die dann schräg an der Stahlkugel angreifende Schwerkraft eine dauernde Verlagerung der Stahlkugel verbunden mit einer dauernden Blockierung der Gurtspule verursacht.

Mit der Erfindung soll eine größere Flexibilität bei der Anordnung und Ausbildung des fahrzeugsensitiven Sensors für einen Gurtaufroller erreicht werden.

Erfindungsgemäß ist hierzu ein Sensor für einen Gurtaufroller für Fahrzeugsicherheitsgurtsysteme vorgesehen, der dadurch gekennzeichnet ist, daß die Kupplungsklinke durch einen ersten Arm eines zweiseitigen Hebels gebildet ist, an dessen zweitem Arm der Trägheitskörper bei einer Verlagerung angreift. Das Vorsehen eines zweiseitigen Hebels ermöglicht eine gegenüber dem Stand der Technik wesentlich flexiblere Auslegung des fahrzeugsensitiven Sensors. So kann beispielsweise der vom Ende der Kupplungsklinke zurückgelegte Weg. Größe und Gewicht des Trägheitskörpers und die räumliche Anordnung des Trägheitskörpers im Gurtaufroller leicht variiert werden, ohne Einschränkungen bei der Funktionssicherheit hinnehmen zu müssen.

Als weiterbildende Maßnahme ist vorgesehen, daß der Sensor ein Gehäuse aufweist, an dem der Hebel und der Trägheitssensor gelagert sind und das in bezug auf einen Referenzpunkt um eine Einstellachse verschwenkbar angeordnet ist, wobei ein in die Kupplungsverzahnung einsteuerbarer Ansatz der Kupplungsklinke auf der Einstellachse liegt. Eine solche Ausbildung des fahrzeugsensitiven Sensors schafft die Voraussetzung für eine Einstellung des fahrzeugsensitiven Sensors auf verschieden geneigte Einbaulagen des Gurtaufrollers. Der Sensor kann als Einheit in dem Gurtaufroller verschwenkt werden, ohne daß sich seine Auslösewerte, d.h. die Werte, die zu einer Verlagerung des Trägheitskörpers erforderlich sind, oder der bei einer Verlagerung des Trägheitskörpers vom Ansatz der Kupplungsklinke zurückgelegte Weg verändern würden. Weiterhin ist eine einfache Einstellbarkeit des für den Gurtaufroller vorgesehenen Einbauneigungswinkels gegeben.

In Weiterbildung der Erfindung ist vorgesehen, daß der in die Kupplungsverzahnung einsteuerbare Ansatz der Kupplungsklinke, ein Punkt auf der Drehachse des Hebels und der Schwerpunkt des Trägheitskörpers im Ruhezustand des Sensors auf der Einstellachse liegen. Dadurch entsteht eine kompakte Sensoreinheit, die bei einer Drehung um die Einstellachse nur einen geringen Raumbedarf hat.

Vorteilhafterweise ist das Gehäuse mit einem Verstellzylinder versehen, der drehbar angeordnet ist. Der Sensor kann bspw. in einer Bohrung einer Abdeckhaube vor deren Befestigung an einem Rahmen des Gurtaufrollers angeordnet werden. Ein Verstellzylinder ermöglicht auch eine einfach herzustellende und dabei funktionssichere drehbare Anordnung des Sensors.

Weiterhin ist vorgesehen, daß eine Anzeige- und Einstellvorrichtung für die Schwenklage des Gehäuses des Gurtaufrollers in bezug auf die Kupplungsscheibe vorgesehen ist. Aufgrund dieser Maßnahmen kann ein einziger Typ eines Gurtaufrollers auf verschiedene Einbauneigungen, beispielsweise für verschiedene Fahrzeugtypen, eingestellt werden. Die Anzeige- und Einsteilvorrichtung kann dabei so angeordnet werden, daß die Einstellung von außen vorgenommen und erkannt werden kann.

Es ist vorgesehen, daß der zweite Arm des Hebels im Ruhezustand des Sensors an dem Trägheitskörper anliegt. Jede Verlagerung des Trägheitskörpers wird damit unmittelbar in eine Bewegung der Kupplungsklinke umgesetzt, wodurch ein schnelles Ansprechen des Sensors erreicht wird. Da der zweite Arm des Hebels an dem Trägheitskörper anliegt, kann im Fahrbetrieb auch kein Klappern des Hebels auftreten.

Alternativ ist vorgesehen, daß der zweite Arm des Hebels im Ruhezustand des Sensors in einem vorbestimmten Abstand von dem Trägheitskörper angeordnet ist. Hierbei ist vorteilhaft, daß die anfängliche Verlagerung des Trägheitskörpers nicht durch Reibung zwischen dem zweiten Arm des Hebels und dem Trägheitskörper beeinflußt wird. Die exakte Einhaltung der konstruktiv vorgegebenen Beschleunigungsschwelle, ab der eine Verlagerung des Trägheitskörpers erfolgt, ist damit gewährleistet.

Als weiterbildende Maßnahme ist vorgesehen, daß der Sensor ein Gehäuse mit einem Anschlag aufweist, in dem ein Arm des Hebels im Ruhezustand des Sensors anliegt. Auf diese Weise kann ein konstanter vorbestimmter Abstand zwischen dem Arm des Hebels und dem Trägheitskörper siehergestellt werden.

Es ist vorteilhaft, wenn der Trägheitskörper durch eine Kugel gebildet ist und der zweite Arm einen Ring aufweist, der eine Schicht der Kugel umgibt. Das Vorsehen eines Ringes, der eine Schicht der Kugel umgibt, ermöglicht, daß der zweite Arm des Hebels im unteren Bereich der Kugel angreift, in dem die Kugel auch auf einer Unterlage aufsitzt. Dadurch werden weitere Gestaltungsmöglichkeiten für den fahrzeugsensitiven Sensor eröffnet.

Es ist dabei vorteilhaft, daß der Ring eine der Kugel zugewandte Anlagefläche hat, die im wesentlichen die Form einer Kreiskegelstumpffläche aufweist, deren Erzeugende zu der Mittelachse des Rings um einen Winkel von etwa 40° geneigt ist. Eine solche Ausbildung des Rings ermöglicht ein reibungsarmes Auflaufen der Kugel auf den Ring, so daß die zum Einsteuern der Kupplungsklinke erforderlichen Beschleunigungswerte nur unwesentlich durch Reibung zwischen Kugel und Ring beeinflußt werden.

Es ist vorteilhaft, wenn der Sensor ein Gehäuse mit einer Lagerauflage zum Lagern des Hebels und einer Kugelauflage zum Aufnehmen der Kugel aufweist. Die Kugelauflage ist dabei vorteilhafterweise durch einen Kreiszylinder mit einer kegelförmigen Vertiefung in einer Stirnseite gebildet, so daß eine ringförmige Auflagefläche für die Kugel entsteht. Durch eine ringförmige Auflagefläche bleibt die Kugel in Ruhe, solange nicht ein durch die konstruktive Ausgestaltung vorgegebener Beschleunigungswert überschritten ist. Die Kugelauflage ist, da nur eine Ringfläche mit der Kugel in Berührung ist, gegen Verschmutzung unanfällig.

In Weiterbildung der Erfindung kann der Hebel entlang seiner Drehachse wenigstens eine Lagerschneide oder zwei Lagerspitzen aufweisen. Diese Ausbildungen ermöglichen beide eine reibungsarme und dabei, beispielsweise durch Spritzgußteile, einfach herzustellende Lagerung des Hebels. Lagerschneiden können in einer V-förmigen Vertiefung gelagert werden, wohingegen Lagerspitzen kegelförmig ausgeführt und in ebenfalls kegelförmigen Vertiefungen mit größerem Kegelwinkel als die Lagerspitzen angeordnet werden können.

Bei einer Ausführungsform der Erfindung ist vorgesehen, daß der am zweiten Arm des Hebels angeordnete Ring unterhalb des Mittelpunkts der Kugel angeordnet ist. Eine Verlagerung der Kugel führt damit zu einer Abwärtsbewegung des zweiten Armes und einer Aufwärtsbewegung der Kupplungsklinke, so daß der Sensor unterhalb der Kupplungsscheibe des Gurtaufrollers angeordnet werden kann. Es ist dabei vorteilhaft, wenn der Schwerpunkt des Hebels bezogen auf die Drehachse des Hebels auf der Seite des ersten Armes liegt. Der Ring wird damit durch die Schwerkraft in Richtung auf die Kugel gedrängt, so daß im Ruhezustand des Sensors das Anliegen des Ringes an der Kugel oder, in Verbindung mit einem Anschlag, ein konstanter Abstand des Ringes von der Kugel gewährleistet ist.

Alternativ ist vorgesehen, daß der am zweiten Arm des Hebels angeordnete Ring oberhalb des Mittelpunkts der Kugel angeordnet ist. Hierbei führt eine Verlagerung der Kugel zu einer Aufwärtsbewegung des zweiten Armes und einer Abwärtsbewegung der Kupplungsklinke, so daß ein Sensor mit diesen Merkmalen oberhalb der Kupplungsscheibe angeordnet werden kann. Um auch hier einen konstanten Abstand von dem Ring zu der Kugel oder ein Anliegen des Ringes an der Kugel sicherzustellen, liegt der Schwerpunkt des Hebels bezogen auf die Drehachse des Hebels vorteilhafterweise auf der Seite des zweiten Armes.

Weitere Merkmale und Vorteile der Erfindung ergeben sich aus der folgenden Beschreibung und der beigefügten Zeichnung. In der Zeichnung zeigen:
Figur 1 eine perspektivische Teilansicht eines erfindungsgemäßen Sensors gemäß einer ersten Ausführungsform;
Figur 2 eine teilweise geschnittene Teilseitenansicht des Sensors der Figur 1;
Figur 3 eine der Figur 2 ähnliche Ansicht beim Auftreten einer starken Fahrzeugbeschleunigung;
Figur 4 eine der Figur 2 ähnliche Ansicht bei starker Fahrzeugverzögerung;
Figur 5 eine perspektivische Teilansicht des Sensors der Figur 1 aus anderem Blickwinkel;
Figur 6 eine Seitenansicht eines fahrzeugsensitiven Sensors einer zweiten Ausführungsform; und
Figur 7 eine teilweise geschnittene Seitenansicht des in der Figur 6 dargestellten Sensors.

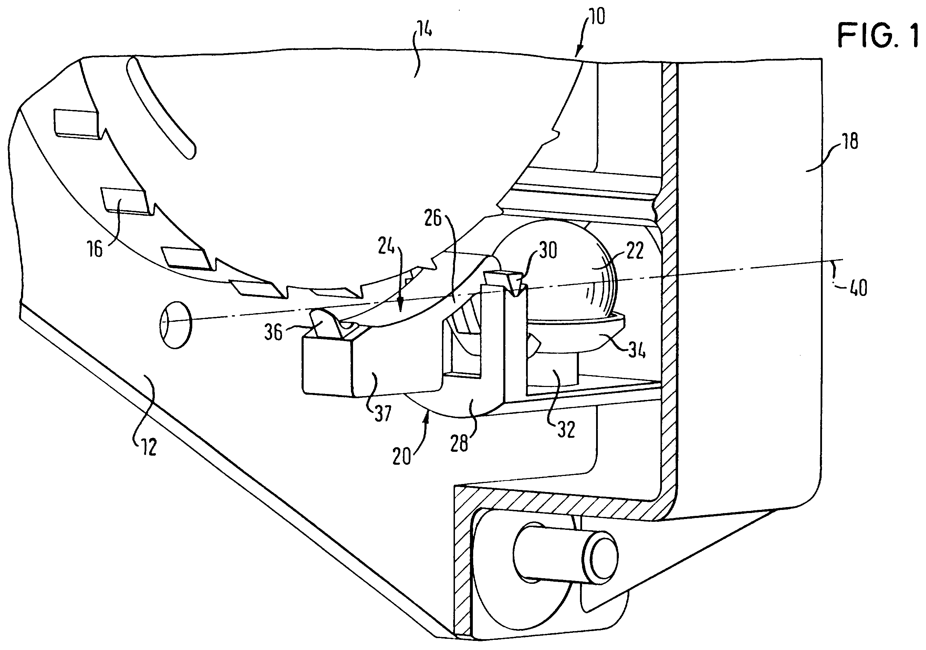

Figur 1 zeigt eine perspektivische Teilansicht eines Gurtaufrollers 10 mit einem Sensor gemäß einer ersten Ausführungsform. Der Gurtaufroller 10 weist einen Rahmen 12 und eine in dem Rahmen 12 drehbar gelagerte konventionelle Gurtspule (nicht gezeigt) auf. Von einem konventionellen Blockiermechanismus zur selektiven, drehfesten Blockierung der Gurtspule am Rahmen 12 ist lediglich eine Kupplungsscheibe 14 mit einer Kupplungsverzahnung 16 dargestellt. An dem Rahmen 12 ist eine Abdeckhaube 18 befestigt, die teilweise geschnitten dargestellt ist. Zur Aktivierung des Blockiermechanismus bei starken Beschleunigungen oder Verzögerungen des Fahrzeugs ist der fahrzeugsensitiver Sensor 20 vorgesehen. Der Sensor 20 weist eine als träge Masse wirkende Metallkugel 22 und eine Kupplungsklinke 24 auf, die durch eine Verlagerung der Kugel 22 in die Kupplungsverzahnung 16 der Kupplungsscheibe 14 eingesteuert werden kann. Die Kupplungsklinke 24 bildet dabei einen ersten Arm eines zweiseitigen Hebels 26, an dessen zweitem Arm die Kugel 22 bei einer Verlagerung angreift. Der zweiseitige Hebel 26 ist auf einem Sensorgehäuse 28 gelagert, das wiederum an der Abdeckhaube 18 befestigt ist. Um eine reibungsarme Lagerung des Hebels 26 zu bewirken, weist dieser zwei Lagerschneiden 30 auf, die auf dem Sensorgehäuse 28 jeweils in einer V-förmigen Vertiefung aufliegen. In dem Gehäuse 28 ist weiterhin eine Kugelauflage 32 gebildet, auf der die Kugel 22 aufliegt. Der zweite Arm des Hebels 26 weist an seinem der Kugel 22 zugewandten Ende einen Ring 34 auf, der eine Schicht der Kugel 22 umgibt und konzentrisch zur Kugelauflage 32 angeordnet ist. Die Kupplungsklinke 24 ist mit einem Ansatz 36 versehen, der bei einer Verlagerung der Kugel 22 in die Kupplungsverzahnung 16 eingreift. Weiterhin weist die Kupplungsklinke 24 ein Gewicht 37 auf, das sicherstellt, daß der Ring 34 an der Kugel 22 anliegt.

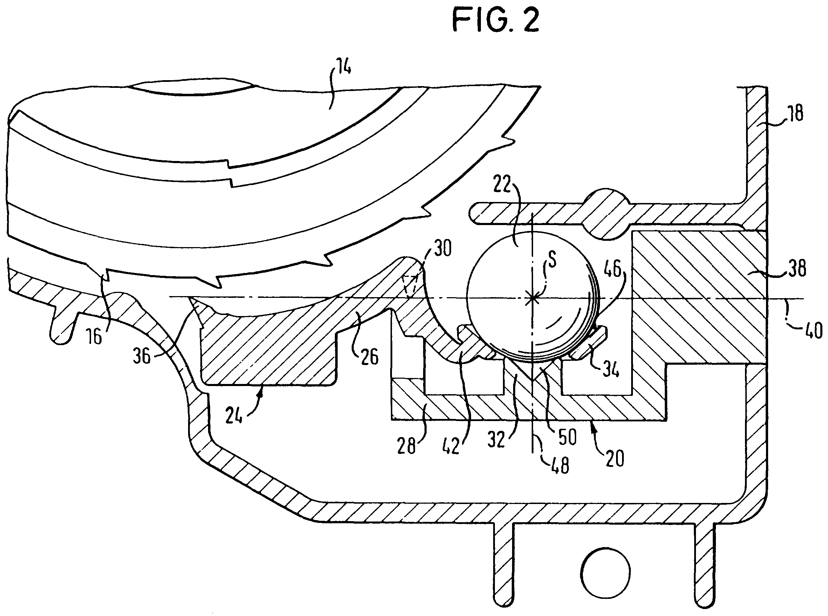

In der Seitenansicht der Figur 2 sind das Sensorgehäuse 28, der zweiseitige Hebel 26 und die Abdeckhaube 18 geschnitten dargestellt. Das Sensorgehäuse 28 weist an seinem der Kupplungsklinke 24 abgewandten Ende einen Verstellzylinder 38 auf, der in einer Bohrung in der Abdeckhaube 18 angeordnet ist. Das Sensorgehäuse 28 ist damit um eine Einstellachse 40 drehbar an der Abdeckhaube 18 angeordnet. Wie in der Figur 2 gut zu erkennen ist, die den Ruhezustand des Fahrzeugsensitiven Sensors 20 zeigt, liegen die vorderste Spitze des Ansatzes 36 der Kupplungsklinke 24, die Schneide der gestrichelt angedeuteten Lagerschneiden 30, d.h. die Drehachse des Hebels 26, der Schwerpunkt S der Kugel 22 und die Längsachse des Verstellzylinders 38 auf der Einstellachse 40. Der Sensor 20 kann damit um die Einstellachse 40 gedreht und damit auf die Richtung der Erdbeschleunigung ausgerichtet werden, ohne daß sich seine Auslöseeigenschaften verändern. Wie der Figur 2 weiterhin zu entnehmen ist, verändert eine Drehung des Sensors 20 um die Einstellachse 40 auch nicht den Abstand des Ansatzes 36 zu der Kupplungsverzahnung 16 auf der Kupplungsscheibe 14, da die Spitze des Ansatzes 36 auf der Einstellachse 40 liegt und, wie in der Figur 1 zu erkennen ist, die Spitze 36 kreisförmig abgerundet ist. Auch bei um die Einstellachse 40 verdrehtem Sensor 20 hat die Spitze des Ansatzes 36 im wesentlichen stets den gleichen Abstand von der Verzahnung 16 der Kupplungsscheibe 14.

In Figur 2 ist auch der zweite Arm 42 des Hebels 26 zu erkennen, der an seinem der Kugel 22 zugewandten Ende den Ring 34 aufweist. Der Ring 34 umgibt eine Kugelschicht der Kugel 22 und liegt mit seiner Anlagefläche 46 an der Kugel 22 an. Die Anlagefläche 46 hat die Form einer Kreiskegelstumpffläche. Eine Erzeugende dieser Kreiskegelstumpffläche ist dabei zu der Mittelachse 48 des Rings 34, die auch durch den Schwerpunkt S der Kugel 22 läuft, um etwa 40° geneigt.

Die Kugel 22 ruht auf der Kugelauflage 32, die durch einen mit dem Gehäuse 28 einstückigen Kreiszylinder gebildet ist, der in seiner der Kugel 22 zugewandten Stirnseite eine kegelförmige Vertiefung 50 aufweist. Die Kugel 22 liegt damit auf einer ringförmigen Auflagefläche auf.

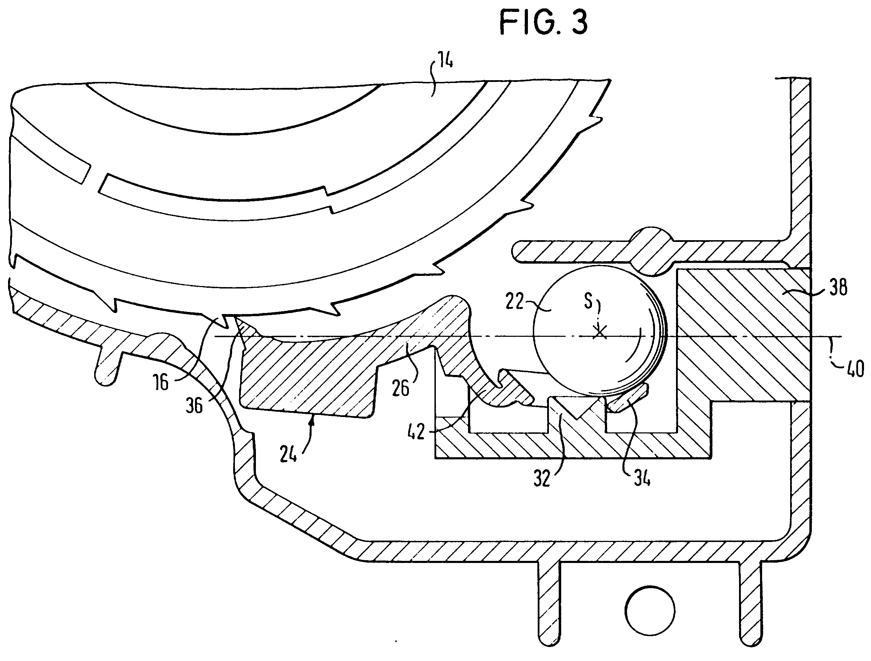

Figur 3 zeigt eine der Figur 2 entsprechende Ansicht, wobei aber die Kugel 22 aufgrund einer starken Fahrzeugbeschleunigung, beispielsweise durch einen Heckaufprall eines weiteren Fahrzeugs, nach rechts verlagert ist. Die Kugel 22 verlagert sich dabei nur dann in der in der Figur 3 dargestellten Weise, wenn sie durch die Wirkung der Beschleunigung teilweise von der ringförmigen Auflagefläche der Kugelauflage 32 abgehoben wird. Bei einer solchen Bewegung verlagert sieh auch der Schwerpunkt S der Kugel 22 nach oben. Um eine Verlagerung der Kugel 22 zu erreichen, ist daher eine Beschleunigung erforderlich, die eine bestimmte Schwelle überschreitet. Diese Schwelle kann durch das Gewicht der Kugel 22, den Durchmesser der Kugel 22 sowie durch den Durchmesser der ringförmigen Auflagefläche der Kugelauflage 32 eingestellt werden. Die in der Figur 3 dargestellte Verlagerung der Kugel 22 führt dazu, daß der Ring 34 nach unten gedrückt wird. Infolgedessen wird auch der zweite Arm 42 des Hebels 26 nach unten gedrückt, so daß sich der erste Arm oder die Kupplungsklinke 24 nach oben bewegt. Infolgedessen gelangt der Ansatz 36 der Kupplungsklinke 24 in den Bereich der Kupplungsverzahnung 16 der Kupplungsscheibe 14, und bei einer Drehung der Gurtspule und damit der Kupplungsscheibe 14 wird der Blockiermechanismus für die Gurtspule aktiviert.

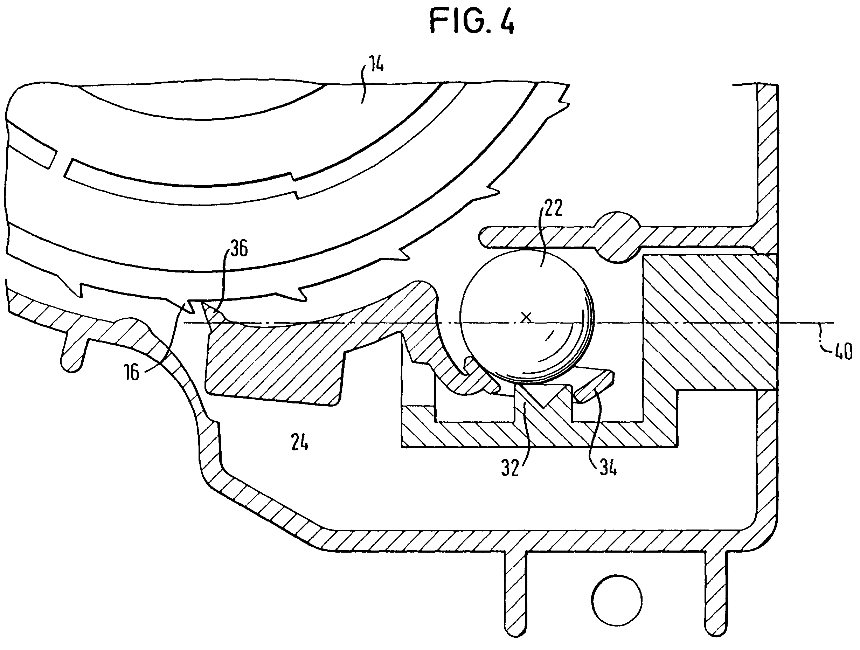

Figur 4 zeigt die Verhältnisse bei einer auf das Fahrzeug einwirkenden starken Verzögerung, beispielsweise bei einem Frontalaufprall. Unter der Wirkung der dann auftretenden starken Beschleunigung ist die Kugel 22 nach links verlagert, wodurch der Ring 34 nach unten gedrückt wird. Auch bei einer starken Verzögerung des Fahrzeugs wird damit, wie in der Figur 4 gezeigt ist, die Kupplungsklinke 24 nach oben ausgelenkt und der Ansatz 36 gelangt in den Bereich der Kupplungsverzahnung 16 auf der Kupplungsscheibe 14, so daß bei einer Drehung der Gurtspule der Blockiermechanismus aktiviert wird.

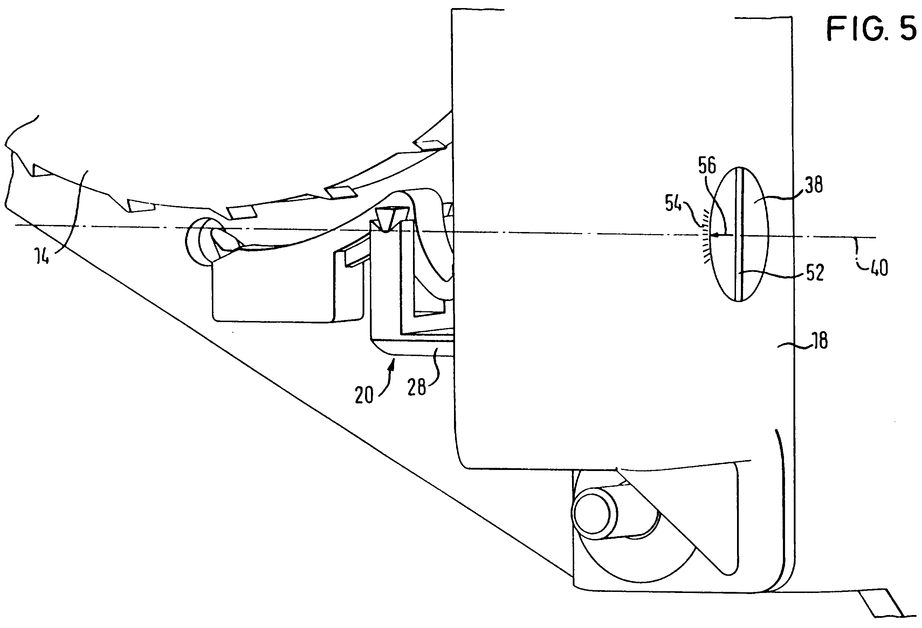

Die perspektivische Ansicht der Figur 5 zeigt den in den Figuren 1 bis 4 dargestellten Gurtaufroller mit dem erfindungsgemäßen Sensor abschnittsweise von schräg hinten. In der Figur 5 ist zu erkennen, daß der Verstellzylinder 38 von der Außenseite der Abdeckhaube 18 her zugänglich ist und einen Schlitz 52 aufweist, über den, beispielsweise mit Hilfe eines Sehraubendrehers, der Sensor 20 um die Einstellachse 40 verdreht werden kann. Um die Schwenklage des Sensors 20, bzw. des Sensorgehäuses 28 in bezug auf den Rahmen 12, der als Referenzpunkt dient, und in bezug auf die Kupplungsscheibe 14 anzuzeigen, ist die Abdeckhaube 18 am Umfang der den Verstellzylinder 38 aufnehmenden Bohrung mit einer Skala 54 versehen. Der Verstellzylinder 38 wiederum weist einen Pfeil 56 auf, der auf die Skala 54 zeigt.

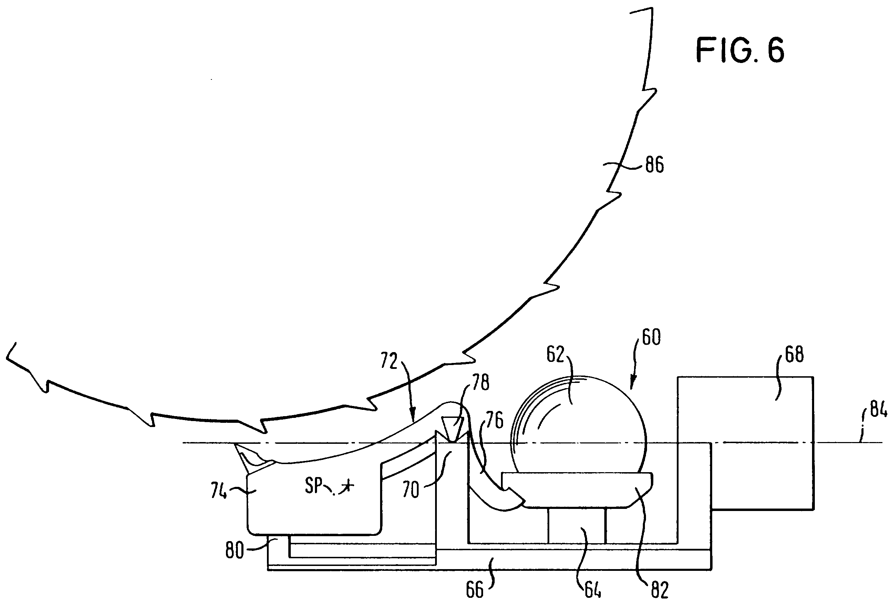

Ein fahrzeugsensitiver Sensor 60 einer zweiten Ausführungsform ist in der Figur 6 dargestellt. Auch dieser Sensor 60 ist mit einer Kugel 62 versehen, die auf einer Kugelauflage 64 eines Sensorgehäuses 66 aufliegt, das weiterhin mit einem Verstellzylinder 68 und einer Lagerauflage 70 versehen ist. Auf der Lagerauflage 70 ruht ein zweiseitiger Hebel 72, der als ersten Arm eine Kupplungsklinke 74 und einen zweiten Arm 76 aufweist. Der Hebel 72 ist auf der Lagerauflage 70 über zwei Lagersehneiden 78 gelagert, von denen in der Figur 6 lediglich eine zu erkennen ist. Um den zweiseitigen Hebel 72 sicher auf der Lagerauflage 70 zu halten und gleichzeitig eine reibungsarme Lagerung sicherzustellen, ist die Lagerauflage 70 V-förmig eingeschnitten, wobei der Öffnungswinkel des V-förmigen Einschnitts der Lagerauflage 70 größer ist als der Winkel der Lagerschneiden 78. Das Sensorgehäuse 66 weist einen Anschlag 80 auf, auf dem die Kupplungsklinke 74 aufliegt. Im Ruhezustand des Sensors 60 liegt die Kupplungsklinke 74 dabei stets an dem Anschlag 80 an, da der Schwerpunkt SP des zweiseitigen Hebels 72 bezogen auf die Drehachse des Hebels 72, die durch die Kontaktlinie zwischen Lagerauflage 70 und Lagerschneiden 78 festgelegt ist, auf der Seite der Kupplungsklinke 74 liegt. Durch das Anliegen der Kupplungsklinke 74 an dem Anschlag 80 ist infolgedessen im Ruhezustand des Sensors 60 auch die Lage eines Ringes 82 festgelegt, der an dem zweiten Arm 76 angeordnet ist und die Kugel 62 und die Kugelauflage 64 abschnittsweise umgibt.

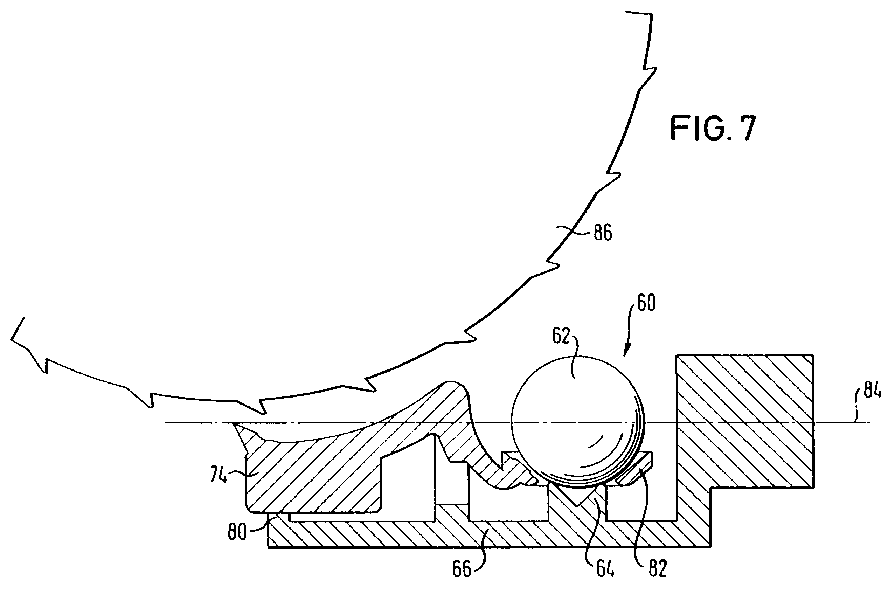

Der in der Figur 6 dargestellte Sensor 60 ist in der Figur 7 teilweise geschnitten dargestellt. In dieser Schnittansicht ist zu erkennen, daß der Ring 82 im Ruhezustand des Sensors in einem vorbestimmten Abstand von der Kugel 62 angeordnet ist. Dies wird dadurch erreicht, daß, wie zu Figur 6 erläutert, die Kupplungsklinke 74 auf dem Anschlag 80 aufliegt. Eine aufgrund einer auf die Kugel 62 einwirkenden Beschleunigung erfolgende Verlagerung der Kugel 62 erfolgt damit unbeeinflußt von eventueller Reibung zwischen der Anlagefläche des Rings 82 und der Oberfläche der Kugel 62. Die konstruktiv vorgegebene Beschleunigungsschwelle, ab der eine Verlagerung der Kugel 62 erfolgt, ist damit unempfindlich gegen eine Erhöhung der Reibung zwischen dem Ring 82 und der Kugel 62, wie sie beispielsweise durch Alterung der Materialien oder Verschmutzung erfolgen kann.

## Patentansprüche

1. Sensor für einen Gurtaufroller für Fahrzeugsicherheitsgurtsysteme, mit einem Trägheitskörper (22; 62) und einer Kupplungsklinke (24; 62), die durch eine Verlagerung des Trägheitskörpers (22; 62) in eine Kupplungsverzahnung (16) eingesteuert werden kann, dadurch gekennzeichnet, daß die Kupplungsklinke (24; 74) durch einen ersten Arm eines zweiseitigen Hebels (26; 72) gebildet ist, an dessen zweitem Arm (42; 76) der Trägheitskörper (22; 62) bei einer Verlagerung angreift.

2. Sensor nach Anspruch 1, dadurch gekennzeichnet, daß der Sensor (20; 60) ein Gehäuse (28; 66) aufweist, an dem der Hebel (26; 72) und der Trägheitskörper (22; 62) gelagert sind und das in bezug auf einen Referenzpunkt um eine Einstellachse (40; 84) verschwenkbar angeordnet ist, wobei ein in die Kupplungsverzahnung (16) einsteuerbarer Ansatz (36) der Kupplungsklinke (24; 74) auf der Einstellachse liegt.

3. Sensor nach Anspruch 2, dadurch gekennzeichnet, daß der in die Kupplungsverzahnung (16) einsteuerbare Ansatz (36) der Kupplungsklinke (24; 74), ein Punkt auf der Drehachse des Hebels (26; 72) und der Schwerpunkt (S) des Trägheitskörpers (22; 62) im Ruhezustand des Sensors (20; 60) auf der Einstellachse (40; 84) liegen.

4. Sensor nach Anspruch 2 oder 3, dadurch gekennzeichnet, daß das Gehäuse (28; 66) mit einem Verstellzylinder (38) versehen ist, der drehbar gelagert ist.

5. Sensor nach einem der Ansprüche 2 bis 4, dadurch gekennzeichnet, daß eine Anzeige- und Einstellvorrichtung (52, 54, 56) für die Schwenklage des Gehäuses (28; 66) relativ zu einem Referenzpunkt vorgesehen ist.

6. Sensor nach einem der Ansprüche 1 bis 5, dadurch gekennzeichnet, daß der zweite Arm (42) des Hebels (26) im Ruhezustand des Sensors (20) an dem Trägheitskörper (22) anliegt.

7. Sensor nach einem der Ansprüche 1 bis 5, dadurch gekennzeichnet, daß der zweite Arm (76) des Hebels 72) im Ruhezustand des Sensors (60) in einem vorbestimmten Abstand von dem Trägheitskörper (62) angeordnet ist.

8. Sensor nach Anspruch 7, dadurch gekennzeichnet, daß der Sensor (60) ein Gehäuse (66) mit einem Anschlag (80) aufweist, an dem ein Arm (74) des Hebels (72) im Ruhezustand des Sensors (60) anliegt.

9. Sensor nach einem der vorstehenden Ansprüche, dadurch gekennzeichnet, daß der Trägheitskörper durch eine Kugel (22; 62) gebildet ist und der zweite Arm (42; 76) einen Ring (34; 82) aufweist, der eine Schicht der Kugel (22; 62) umgibt.

10. Sensor nach Anspruch 9, dadurch gekennzeichnet, daß der Ring (34; 82) eine der Kugel (22; 62) zugewandte Anlagefläche (46) hat, die im wesentlichen die Form einer Kreiskegelstumpffläche aufweist, deren Erzeugende zu der Mittelachse (48) des Rings (34; 82) um einen Winkel von etwa 40° geneigt ist.

11. Sensor nach Anspruch 9 oder 10, dadurch gekennzeichnet, daß der Sensor (20; 60) ein Gehäuse (28; 66) mit einer Lagerauflage (70) zum Lagern des Hebels (26; 72) und einer Kugelauflage (32; 64) zum Aufnehmen der Kugel (22; 62) aufweist.

12. Sensor nach Anspruch 11, dadurch gekennzeichnet, daß die Kugelauflage (32; 64) durch einen Kreiszylinder mit einer kegelförmigen Vertiefung (50) in einer Stirnseite gebildet ist.

13. Sensor nach einem der Ansprüche 1 bis 12, dadurch gekennzeichnet, daß der Hebel (26; 72) entlang seiner Drehachse wenigstens eine Lagerschneide (30; 78) aufweist.

14. Sensor nach einem der Ansprüche 1 bis 12, dadurch gekennzeichnet, daß der Hebel entlang seiner Drehachse zwei Lagerspitzen aufweist.

15. Sensor nach einem der Ansprüche 9 bis 14, dadurch gekennzeichnet, daß der am zweiten Arm (42; 76) des Hebels (26; 72) angeordnete Ring (34; 82) unterhalb des Mittelpunkts der Kugel (22; 62) angeordnet ist.

16. Sensor nach Anspruch 15, dadurch gekennzeichnet, daß der Schwerpunkt (S) des Hebels (26; 72) bezogen auf die Drehachse des Hebels (26; 72) auf der Seite des ersten Armes (24; 74) liegt.

17. Sensor nach einem der Ansprüche 9 bis 14, dadurch gekennzeichnet, daß der am zweiten Arm des Hebels angeordnete Ring oberhalb des Mittelpunkts der Kugel angeordnet ist.

18. Sensor nach Anspruch 17, dadurch gekennzeichnet, daß der Schwerpunkt des Hebels bezogen auf die Drehachse des Hebels auf der Seite des zweiten Armes liegt.

19. Gurtaufroller für Fahrzeugsicherheitsgurtsysteme mit einem Sensor (20; 60) nach einem der vorstehenden Ansprüche.
